# EUROPEAN PATENT APPLICATION

(11) **EP 2 023 687 A1**
(43) Date of publication of application: **11.02.2009**
(21) Application number: 07015537.9
(22) Date of filing: 07.08.2007
(51) Int. Cl.: H04W 92/14

(54) **Method and device for utilizing at least one CS service and communication system comprising such device**

(71) Applicant: Nokia Siemens Networks Oy, 02610 Espoo (FI)
(72) Inventor: Aalto, Mika M., 02660 Espoo (FI); Kallio, Juha, 01610 Vantaa (FI)
(74) Representative: Bruglachner, Thomas E.

(57) **Abstract**

A method and a device are provided for utilizing at least one circuit switched (CS) service by an LTE/SAE network via an interface between the LTE/SAE network and a circuit switched domain, in particular a mobile switching center (MSC).

## Description

The invention relates to a method and to a device for utilizing at least one CS service and to a communication system comprising such a device.

3GPP LTE (Long Term Evolution) is the name given to a project within the Third Generation Partnership Project to improve the UMTS mobile phone standard to cope with future requirements (see [1]).

LTE/SAE (LTE/Systems Architecture Evolution) is designed to support packet switched services only, i.e. service flows that are conveyed on top of an Internet Protocol (IP).

In current GSM/WCDMA (Global System for Mobile communications / Wideband Code Division Multiple Access) systems, voice and SMS services are offered by a circuit switched (CS) core network. Operators invested significant amounts of money and implemented various proprietary CS services for the CS domain (e.g., prepaid, supplementary services, intelligent network (IN) services, premium numbers, etc.), that are not automatically available in, e.g., an IP multimedia system (IMS, see [2]) architecture.

Yet it is only an assumption in 3GPP specific LTE/SAE that all required services shall be supported via IMS. An implementation of the same or similar services as offered by the CS domain to the IMS domain will still require extensive additional investments for the operators.

Further, such an investment in IMS (because of new services) as well as the dependency of LTE/SAE deployment on functional IMS services can become a problem for an operator if the operator wants feature transparency towards the CS network.

The first LTE/SAE deployments are expected to be hot zones in dense urban areas such as, e.g., London Metropolitan area.
Hence, a main driver for LTE/SAE is expected to be a cost efficient high performance data access.

The problem to be solved is to overcome the disadvantages as described and to provide an enhancement of an LTE/SAE network in particular with regard to voice and message services.

This problem is solved according to the features of the independent claims. Further embodiments result from the depending claims.

In order to overcome this problem, a method is provided for utilizing at least one circuit switched (CS) service by an LTE/SAE network via an interface between the LTE/SAE network and a circuit switched domain, in particular a mobile switching center (MSC).

LTE/SAE network in this regard refers to any kind of LTE system and/or deployment.

This advantageously allows to utilize services by the LTE/SAE network, said services being already deployed in the CS domain.

This approach may further be useful as the LTE/SAE deployment preferably utilizes fast data services, whereas, e.g., existing voice and SMS solutions can be processed via the already set up CS domain.

In an embodiment, the interface is set up between the LTE/SAE network and a GSM/WCDMA network.

GSM/WCDMA network refers to a network capable of providing GSM and/or WCDMA services.

In another embodiment, the interface is set up between a mobility management entity (MME) of the LTE/SAE network and the CS domain.

In a further embodiment, the interface utilizes at least a portion of rules and/or services as set forth by a Gs interface.

The Gs interface is a GPRS (General Packet Radio Service) interface between a serving GPRS support node (SGSN) and the mobile switching center (MSC).

In a next embodiment, the interface utilizes at least a portion of rules and/or services as set forth by a Iu interface.

The Iu interface is an interface between the radio access network and the core network.

It is also an embodiment that the at least one CS service comprises a voice service. The at least one CS service may further comprise an SMS service.

Pursuant to another embodiment, the at least one CS service is redirected to GSM/WCDMA.

According to an embodiment, a user equipment (UE) is attached to the LTE/SAE network and a mobile originated (MO) call and/or a mobile terminated (MT) call is redirected to the CS domain, in particular to GSM/WCDMA.

The problem stated supra is also solved by a device comprising a processor unit that is arranged and/or equipped such that the method as described herein is executable on said processor unit.

According to an embodiment said device is a communication device.

According to another embodiment said device is a network element of a LTE/SAE network, in particular a mobility management entity (MME).

In yet another embodiment, said device is a mobility switching center server (MSC Server, MSS).

It is also an embodiment that said device is a mobile terminal, in particular a mobile terminal or a user equipment (UE).

Furthermore, the problem stated above may be solved by a communication system comprising the device as described herein.

Embodiments of the invention are shown and illustrated in the following figures:
- Fig.1: shows an architecture comprising components of an SAE/LTE system as well as of a CS domain;
- Fig.2: shows a signaling flow diagram for a combined network attach procedure;
- Fig.3: shows a signaling flow diagram for a redirection in case of a MT call.

The approach provided herewith suggests utilizing in particular the CS core services instead of investing in the full range IP multimedia system (IMS). As a preferred option, early LTE/SAE deployments could reuse the services already provided by the CS domain.

CS service redirection to GSM/WCDMA could be implemented for voice and optionally for SMS services.

Advantageously, this approach does not involve the IMS and does not require significant new features to be added to the user equipment (UE).

Another advantage is that the UE can attach to the LTE/SAE system for a better data service performance, but with a mobile terminated (MT) call or a mobile originated (MO) call being established, the UE may be redirected to the CS domain, in particular to a network providing GSM and/or WCDMA services.

In case of the MO call, the UE may comprise a policy, which defines that after the user has accepted a call (in many mobile terminals by pushing the "green" button), the UE changes from the LTE/SAE cell to a GSM cell or to a WCDMA cell.

In case of the MT call, the network may assist the UE to select the target network of the CS domain (e.g., GSM or WCDMA), in which the call establishment is to be continued. In order to be reachable for MT calls, the UE must be able to register to the CS domain also from the LTE/SAE access.

Redirection of a call can be implemented using services and/or rules as provided (or similar to) a Gs or a Iu type of interface between the mobility management entity (MME) of SAE/LTE core and mobile switching center (MSC).

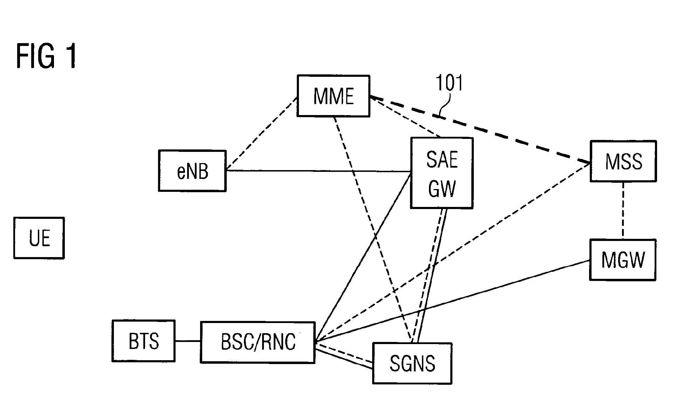

**Fig.1** shows an architecture comprising several components. A mobility management entity MME is connected to an E-UTRAN Node B eNB, to a system architecture evolution gateway SAE GW and to a serving GPRS support node SGNS. The E-UTRAN Node B eNB is further connected to the system architecture evolution gateway SAE GW, which is further connected to the serving GPRS support node SGNS and to a base station controller radio network controller BSC/RNC. The BSC/RNC is further connected to a base transceiver station BTS and to the serving GPRS support node SGNS as well as to a media gateway MGW. A mobile switching center server (MSC server, MSS) is connected to the MME, to the BSC/RNC and to the MGW.

The approach presented herein in particular suggests setting up the interface 101 between the MME and the MSS.

This interface 101 is used for a combined attach procedure and for location updates. In case of the MT call, the interface 101 can be used for paging purposes. In case of the MT call, the E-UTRAN Node B eNB may provide a policy to start redirection for example due to the paging type (CS).

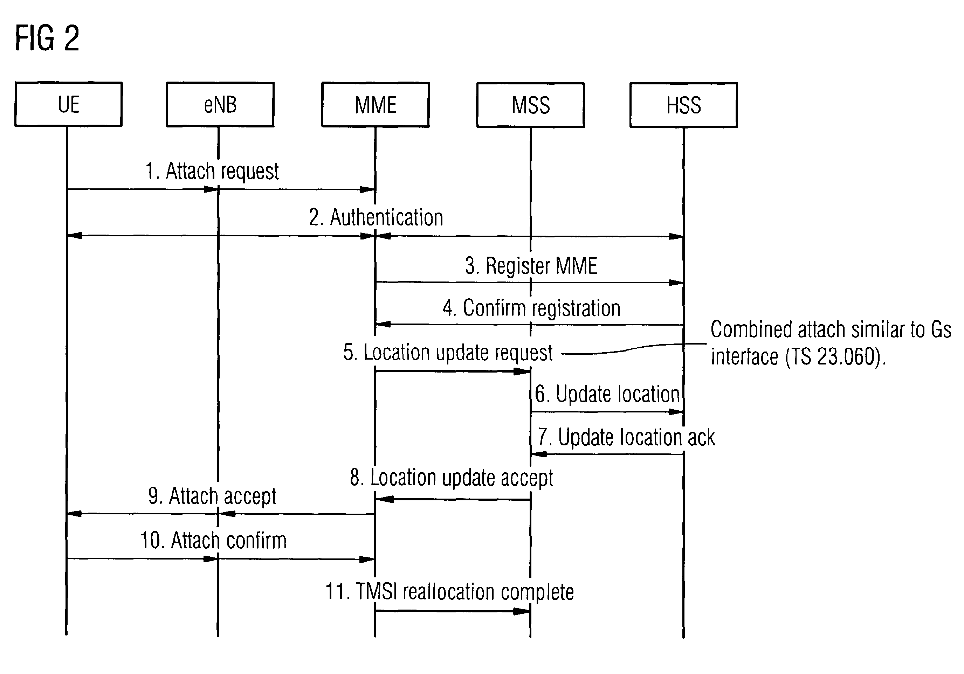

**Fig.2** shows a signaling flow diagram for a combined network attach procedure involving in particular a user equipment UE, the E-UTRAN Node B eNB, the MME, the MSS and a home subscriber server HSS.

The signal flows depicted are as follows:
(1) The UE sends an attach request to the eNB and to the MME.
(2) An authentication is conducted between the UE and the MME as well as between the MME and the HSS.
(3) The MME requests the HSS to register the MME.
(4) A confirm registration message is conveyed from the HSS to the MME.
(5) A location update request is sent from the MME to the MSS. This may in particular correspond to a combined attach procedure similar to the mechanisms of the Gs interface (according to document TS 23.060).
(6) An update location is sent from the MSS to the HSS.
(7) An update location acknowledge message is conveyed from the HSS to the MSS.
(8) The location update is accepted and an according message is transmitted from the MSS to the MME.
(9) The attach requested in step (1) is accepted by sending a message in this regard from the MME to the eNB and to the UE.
(10) An attach confirmation message is sent from the UE to the eNB and to the MME.
(11) A TMSI (Temporary Mobile Subscriber Identity) message is sent from the MME to the MSS.

In particular steps (5), (8) and (11) are utilized for the approach presented herein.

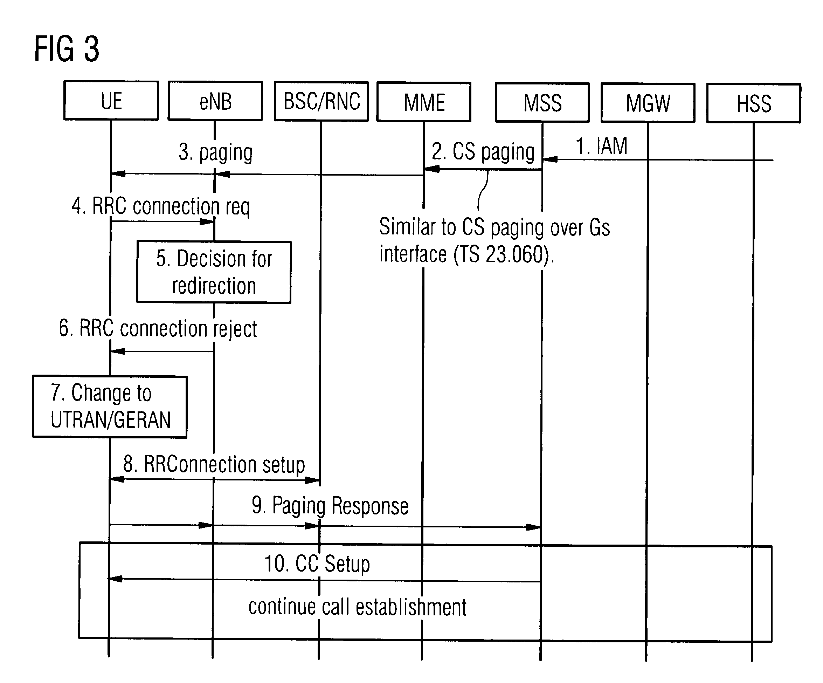

**Fig.3** shows a signaling flow diagram for redirection in case of a mobile-terminated (MT) call involving in particular the UE, the eNB, the BSC/RNC, the MME, the MSS, the MGW and the HSS.

The signal flows depicted are as follows:
(1) An initial address message IAM is received at the MSS.
(2) A CS paging message is sent from the MSS to the MME. This may in particular be similar to the CS paging mechanism over the Gs interface (according to document TS 23.060).
(3) A paging message is sent from the MME to the eNB and to the UE. This may in particular convey the information of the new type, e.g., the call via the CS domain.
(4) The UE sends an RRC (radio resource control) connection request to the eNB.
(5) The eNB processes the decision for redirection.
(6) The eNB sends a RRC connection reject message to the UE.
(7) The UE changes to a UTRAN / GERAN (Universal Terrestrial Radio Access Network, GSM/EDGE Radio Access Network).
(8) A RRC connection setup is conducted between the UE and the BSC/RNC.
(9) A paging response is sent from the UE to the eNB, to the BSC/RNC and to the MSS.
(10) A CC Setup is initiated by the MSS towards the UE. Thereinafter the call establishment continues.

In particular steps (2), (3) and (9) are utilized for the approach presented herein.

### References:

[1] Wikipedia:
   http://en.wikipedia.org/wiki/3GPP_Long_Term_Evolution
[2] Wikipedia:
   http://en.wikipedia.org/wiki/IP_Multimedia_Subsystem

## Claims

1. A method for utilizing at least one CS service by an LTE/SAE network via an interface between the LTE/SAE network and a circuit switched domain, in particular a mobile switching center.

2. The method according to claim 1, wherein the interface is set up between the LTE/SAE network and a GSM/WCDMA network.

3. The method according to any of the preceding claims, wherein the interface is set up between a mobility management entity of the LTE/SAE network and the CS domain.

4. The method according to any of the preceding claims, wherein the interface utilizes at least a portion of rules and/or services as defined by a Gs interface.

5. The method according to any of claims 1 to 3, wherein the interface utilizes at least a portion of rules and/or services as defined by a Iu interface.

6. The method according to any of the preceding claims, wherein the at least one CS service comprises a voice service.

7. The method according to any of the preceding claims, wherein the at least one CS service comprises an SMS service.

8. The method according to any of the preceding claims, wherein the at least one CS service is redirected to GSM/WCDMA.

9. The method according to any of the preceding claims, wherein a user equipment attaches to LTE/SAE network and a mobile originated call and/or a mobile terminated call is redirected to the CS domain, in particular to GSM/WCDMA.

10. A device comprising a processor unit that is arranged such that the method according of any of the preceding claims is executable on said processor.

11. The device according to claim 10, wherein said device is a communication device.

12. The device according to any of claims 10 or 11, wherein said device is a network element of a LTE/SAE network, in particular a mobility management entity.

13. The device according to any of claims 10 to 12, wherein said device is a mobility switching center server.

14. The device according to any of claims 10 to 13, wherein said device is a mobile terminal, in particular a user equipment.

15. Communication system comprising the device according to any of claims 10 to 14.
